# EUROPÄISCHE PATENTANMELDUNG

(11) **EP 1 050 424 A2**
(43) Veröffentlichungstag der Anmeldung: **08.11.2000**
(21) Anmeldenummer: 00107465.7
(22) Anmeldetag: 06.04.2000
(51) Int. Cl.: B60K 17/26

(54) **Wegrollsicherung für Kraftfahrzeuge**

(30) Priorität: 07.05.1999 DE 19921200
(71) Anmelder: Bayerische Motoren Werke Aktiengesellschaft, 80809 München (DE)
(72) Erfinder: Erbersdobler, Ewald, 81476 München (DE); Winkam, Gamjad, 85406 Zolling (DE); Biskup, Ernst, 82223 Eichenau (DE)

(57) **Zusammenfassung**

Die Erfindung betrifft eine Wegrollsicherung für Kraftfahrzeuge mit einem Getriebe, umfassend eine sich am Fahrzeug abstützende Richtungskupplung (12,13,14), die vom Fahrersitz aus betätigbar ist, um ein abtriebsseitiges Bauteil des Getriebes gegen eine Verdrehung zu blockieren. Die Richtungskupplung kann wahlweise in den Betriebszustand unwirksam, wirksam in Vorwärtsrichtung, wirksam in Rückwärtsrichtung oder wirksam in beiden Drehrichtungen geschaltet werden.

## Beschreibung

Die Erfindung betrifft eine Wegrollsicherung für Kraftfahrzeuge mit einem Getriebe, umfassend eine sich am Fahrzeug abstützende Sperreinrichtung, die vom Fahrersitz aus betätigbar ist, um ein abtriebsseitiges Bauteil des Getriebes gegen eine Verdrehung zu blockieren.

In den meisten Ländern haben sich für Kraftfahrzeuge mit Automatikgetriebe Parksperren als Stand der Technik etabliert.

Für Kraftfahrzeuge mit Schaltgetriebe sind Wegrollsicherungen bisher noch nicht gesetzlich vorgeschrieben. Es wird aber auch hier versucht, die Mißbrauchssicherheit in Kundenhand zu erhöhen, beispielsweise durch ein Relais, das ein Starten des Motors verhindert, wenn ein Gang eingelegt ist. Um ein abgestelltes Kraftfahrzeug mit Schaltgetriebe gegen ein unbeabsichtigtes Wegrollen zu sichern, kann entweder die Feststellbremse betätigt werden, oder es kann ein Gang, vorzugsweise der erste Gang oder der Rückwärtsgang eingelegt und die Kupplung geschlossen werden. Das Einlegen eines Ganges und Schließen der Kupplung bietet aber nur einen bedingten Wegrollschutz. Beim Abstellen des Fahrzeugs an einer Steigung und insbesondere im Anhängerbetrieb kann die auf das Fahrzeug einwirkende Kraft, der sogenannte Hangabtrieb, unter Umständen größer sein als die durch die Kompression des Motors bewirkte Gegenkraft. Es gibt auch Antriebsmaschinen, die im Stillstand kein Haltemoment erzeugen (z. B. Elektromotor). Ein weiterer Nachteil dieser bekannten Wegrollsicherung besteht darin, daß sie das Abstellen des Motors voraussetzt. Außerdem besteht die Möglichkeit, daß der Fahrer das Einlegen eines Ganges vergißt. Dabei ist auch die Möglichkeit in Betracht zu ziehen, daß im Fahrzeug verbliebene oder einsteigende Kinder den Gang auslegen können. Es sind auch schon Fälle bekannt geworden, daß durch eine Erschütterung des Fahrzeugs, wie sie beispielsweise bei einem kräftigeren Rempler durch ein anderes ein- oder ausparkendes Fahrzeug verursacht werden kann, der Gang ausgelegt wurde.

In der jüngeren Vergangenheit sind Handschaltgetriebe bekannt geworden, die durch eine automatisierte Kupplung oder durch eine automatisierte Kupplung und zusätzliche Schaltaktuatoren (zum Beispiel für Wählen und Schalten) bedienungsfreundlicher sind. Derartige automatisierte Handschaltgetriebe haben mehr oder minder stark ausgeprägte Eigenschaften eines Automatikgetriebes. Der Fahrer könnte daher die für ein Automatikgetriebe üblichen Sicherheitsmerkmale erwarten, die ein unerwünschtes Wegrollen des abgestellten Kraftfahrzeugs verhindern. Bei solchen automatisierten Handschaltgetrieben kann zwar als Wegrollsicherung bei stillstehendem Motor ein Gang eingelegt und die Kupplung geschlossen werden. Es besteht aber die Gefahr, daß der Benutzer des Kraftfahrzeuges irrtümlich glaubt, es sei eine Parksperre ähnlich wie bei einem Automatikgetriebe wirksam.

Wenn man ein Kraftfahrzeug mit Schaltgetriebe mit einer Parksperre ausrüsten wollte, wie sie bei einem Automatikgetriebe grundsätzlich bekannt ist, dann entstünde dadurch ein nicht unerheblicher axialer Platzbedarf auf einer der Getriebewellen. Speziell bei Kraftfahrzeugen mit Frontantrieb ist dieser Raum aber nicht immer vorhanden.

In der DE 197 10 975 A1 ist eine Parksperre der eingangs genannten Bauart offenbart, bei der ein abtriebsseitiges Bauteil des Ausgleichgetriebes mit einem vom Fahrersitz aus betätigbaren, am Fahrzeug beweglich abgestützten Sperrbauteil formschlüssig blockierbar ist. Dieses Sperrbauteil kann nur den Betriebszustand unwirksam oder wirksam einnehmen, wobei das abtriebsseitige Bauteil des Ausgleichgetriebes im wirksamen Betriebszustand des Sperrbauteils gegen eine Verdrehung in beiden Drehrichtungen blockiert ist.

Der Erfindung liegt die Aufgabe zugrunde, die Wegrollsicherung der eingangs genannten Bauart dahingehend weiterzubilden, daß sie mehrere Funktionen erfüllen kann.

Erfindungsgemäß wird diese Aufgabe dadurch gelöst, daß die Sperreinrichtung eine steuerbare Richtungskupplung ist, die wahlweise den Betriebszustand unwirksam, wirksam in Vorwärtsrichtung, wirksam in Rückwärtsrichtung oder wirksam in beiden Drehrichtungen einnehmen kann.

Die erfindungsgemäße Wegrollsicherung kann in der herkömmlichen Weise benutzt werden, um eine Bewegung des abgestellten Fahrzeugs in beiden Richtungen zu verhindern. Die Wegrollsicherung kann aber auch benutzt werden, um ein unbeabsichtigtes Zurückrollen des Fahrzeugs an einer Steigung zu verhindern (sogenannte Hillholderfunktion). In dieser Stellung der Wegrollsicherung wird das Anfahren in Bergaufrichtung erheblich erleichtert. Dieser Vorteil kommt besonders im Anhängerbetrieb zur Geltung.

Die Erfindung kann in der Weise verwirklicht werden, daß sich die Richtungskupplung am Getriebegehäuse abstützt und auf die Getriebeabtriebswelle einwirkt. Es ist aber auch eine Ausführungsform möglich, bei der sich die Richtungskupplung am Achsgetriebegehäuse abstützt und auf das Ausgleichgehäuse einwirkt. Beide Ausführungsformen der Wegrollsicherung sind von der Bauweise des Getriebes grundsätzlich unabhängig. Es kann sich beispielsweise um ein Schalt- oder Automatikgetriebe, ein stufenloses Getriebe oder bei einem Kraftfahrzeug mit Elektromotor um ein Reduziergetriebe handeln.

Die Richtungskupplung kann manuell steuerbar sein. Der eigentliche Antrieb der Richtungskupplung kann rein mechanisch, elektromotorisch, elektromagnetisch oder hydraulisch/pneumatisch erfolgen.

Bei einer als Wegrollsperre ausgelegten Richtungskupplung ist vorgesehen, daß diese von einem die Drehrichtung des abtriebsseitigen Bauteils ermittelnden Sensor steuerbar ist. Wenn sich das Kraftfahrzeug unter dem Einfluß der Schwerkraft unbeabsichtigt in Bewegung setzt, dann wird die Fahrtrichtung von dem Sensor ermittelt, und die Richtungskupplung wird aktiviert, um eine Bewegung des Fahrzeugs talwärts zu verhindern, aber gleichwohl eine Bergaufbewegung zu ermöglichen. Der Sensor kann beispielsweise von einem die Drehrichtung des abtriebsseitigen Bauteils ermittelnden Friktionsband gebildet sein. Die Richtungskupplung kann aber auch von einem die Neigung des Fahrzeugs ermittelnden Sensor gesteuert werden.

Bei allen Ausführungsformen der Erfindung kann die Richtungskupplung ein Klemmgesperre sein. Ein solches Klemmgesperre zeichnet sich durch einen geringen Bauraum aus, und im Gegensatz zu einem Klinkengesperre ist keine bestimmte Relativstellung für das Einrasten einer Klinke erforderlich, und es entfällt auch das Einrastgeräusch.

Zwei Ausführungsbeispiele der Erfindung sind in den Zeichnungen dargestellt und werden im folgenden näher erläutert. Es zeigt:
Fig. 1 eine erste Ausführungsform einer Wegrollsicherung für ein Kraftfahrzeug, und
Fig. 2 eine zweite Ausführungsform einer Wegrollsicherung für ein Kraftfahrzeug.

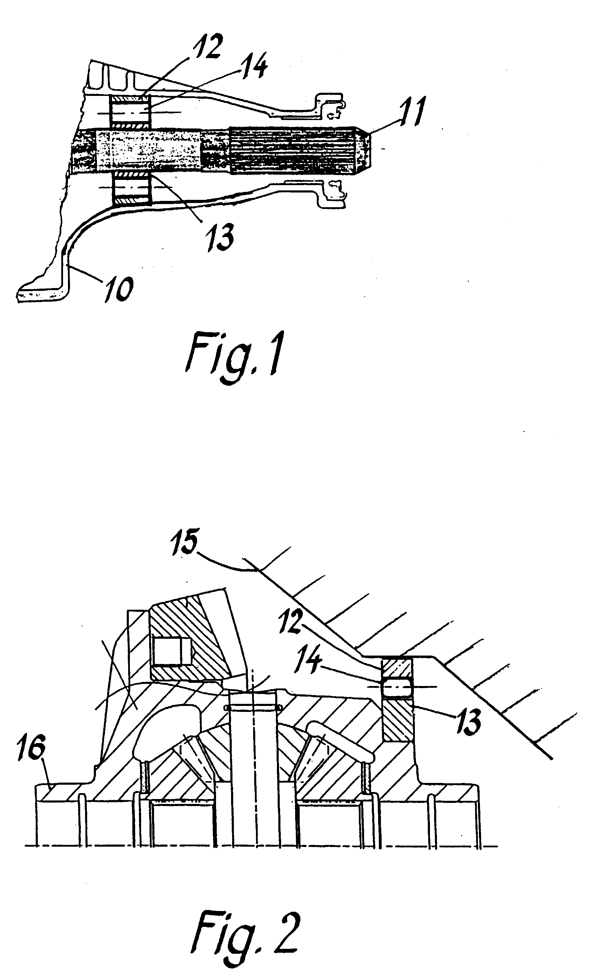

In Fig. 1 ist schematisch ein Getriebegehäuse 10 eines Kraftfahrzeugs dargestellt. Das Getriebe selbst ist nicht gezeigt, und es kann sich um ein beliebiges Handschaltgetriebe, Automatikgetriebe, ein stufenloses Getriebe oder um ein Reduziergetriebe für einen Elektromotor handeln. Von diesem Getriebe ist lediglich die Abtriebswelle 11 gezeigt. Zwischen dem Getriebegehäuse 10 und der Abtriebswelle 11 ist eine steuerbare Richtungskupplung angeordnet. Diese Richtungskupplung kann wahlweise den Betriebszustand unwirksam, wirksam in Vorwärtsrichtung, wirksam in Rückwärtsrichtung oder wirksam in beiden Drehrichtungen einnehmen. Eine solche auch als richtungsgebundene Freilaufkupplung bezeichnete Richtungskupplung wird von der Firma Tesma Motoren- und Getriebetechnik Ges. m.b.H., A-8160 Weiz, vertrieben. Diese Richtungskupplung besteht aus einem am Getriebegehäuse 10 drehfest abgestützten Außenring 12, einem mit der Getriebeabtriebswelle 11 drehfest verbundenen Innenring 13 und zwischen dem Außen- und dem Innenring angeordneten Rollen 14. Mit einer (nicht gezeigten) Betätigungseinrichtung kann die Richtungskupplung wahlweise nach rechts oder nach links oder in beiden Richtungen gesperrt werden.

Die Betätigungseinrichtung zum wahlweisen Freigeben oder Blockieren der Richtungskupplung in einer oder in zwei Richtungen kann vom Fahrersitz aus betätigt werden. Diese (nicht gezeigte) Betätigungseinrichtung kann mechanisch, elektromotorisch, elektromagnetisch oder hydraulisch/pneumatisch ausgebildet sein.

Im normalen Fahrbetrieb ist die Richtungskupplung in beiden Richtungen offen. Die Richtungskupplung wirkt daher in beiden Drehrichtungen als Freilauf, so daß sich die Abtriebswelle 11 für Vorwärts- und Rückwärtsfahrt in beiden Richtungen gegenüber dem Getriebegehäuse 10 verdrehen kann.

Wenn das Kraftfahrzeug abgestellt wird, dann wird die Richtungskupplung so aktiviert, daß sie in beiden Richtungen gesperrt ist. In diesem Betriebszustand wirkt die Richtungskupplung als starre Kupplung, so daß die Abtriebswelle 11 mit dem Getriebegehäuse 10 fest verblockt und an einer Verdrehung in beiden Richtungen gehindert ist. Die Richtungskupplung hat daher die Funktion einer Parksperre.

Wenn die Richtungskupplung in einer ausgewählten Richtung gesperrt wird, dann hat die Richtungskupplung die Funktion einer Wegrollsperre, die auch als Hillholder bezeichnet wird. Dieser Betriebszustand der Richtungskupplung wird beim Anfahren am Berg gewählt. Durch die einseitige Sperrwirkung der Richtungskupplung ist das Kraftfahrzeug am Zurückrollen in Talrichtung gehindert. Andererseits wird aber das Anfahren in Bergrichtung nicht behindert. Die Funktion der Richtungskupplung als Wegrollsprerre kann durch entsprechende Wahl der Sperrwirkung beim Anfahren am Berg sowohl in Vorwärts- als auch in Rückwärtsrichtung ausgenutzt werden.

Wenn die Richtungskupplung in der vorstehend beschriebenen Weise als Wegrollsperre oder als Hillholder benutzt wird, dann sind zur automatischen oder halbautomatischen Steuerung der Einrichtung zum Blockieren der Richtungskupplung in einer Drehrichtung verschiedene Einrichtungen möglich. Die Blockiereinrichtung kann beispielsweise von einem die Drehrichtung der Abtriebswelle 11 ermittelnden Sensor oder von einem die Neigung des Fahrzeugs ermittelnden Sensor gesteuert werden. In beiden Fällen wird die Richtungskupplung in der Richtung gesperrt, in der die Abtriebswelle 11 in einer der Talfahrt des Fahrzeugs entsprechenden Drehrichtung blockiert ist.

Die der Richtungskupplung zugeordnete Blockiereinrichtung kann auch mittels eines Friktionsbandes gesteuert werden. Dies ermöglicht es, die Richtungskupplung in Abhängigkeit von der Richtung des auf die Abtriebswelle 11 ausgeübten Drehmoments zu steuern.

Bei der in Fig. 2 gezeigten zweiten Ausführungsform einer Wegrollsicherung ist die Richtungskupplung zwischen einem Achsgetriebegehäuse 15 und dem zugehörigen Ausgleichgehäuse 16 angeordnet. Der Außenring 12 der Richtungskupplung ist mit dem Achsgetriebegehäuse 15 drehfest verbunden, und der Innenring 13 ist mit dem Ausgleichgehäuse 16 drehfest verbunden. Wie bei dem ersten Ausführungsbeispiel ist auch hier eine (nicht gezeigte) Einrichtung vorgesehen, die es ermöglicht, die Richtungskupplung wahlweise im Uhrzeigersinn oder im Gegenuhrzeigersinn oder in beiden Richtungen zu blockieren. Das Ausgleichgehäuse 16 kann daher gegenüber dem Achsgetriebegehäuse 15 wahlweise in beiden Drehrichtungen oder in einer Drehrichtung verblockt werden, so daß die Richtungskupplung als Parksperre oder als Wegrollsperre in Talrichtung wirkt.

Wenngleich es sich bei dem gezeigten Ausführungsbeispiel um das Ausgleichgehäuse eines Hinterachsgetriebes handelt, ist erkennbar, daß dieses Konstruktionsprinzip in der gleichen Weise auch bei einem Vorderachsgetriebe anwendbar ist. Es kommt nur darauf an, daß die Richtungskupplung vier Betriebszustände einnehmen kann, in denen das Ausgleichgehäuse und damit die Achswellen gegenüber dem Achsgetriebegehäuse in beiden Drehrichtungen frei verdrehbar ist, wahlweise in der einen Drehrichtung frei verdrehbar und in der anderen Drehrichtung blockiert ist oder gegen eine Verdrehung in beiden Richtungen blockiert ist.

### Bezugszeichenliste:

- 10: Getriebegehäuse
- 11: Abtriebswelle
- 12: Außenring
- 13: Innenring
- 14: Rollen
- 15: Achsgetriebegehäuse
- 16: Ausgleichgehäuse

## Patentansprüche

1. Wegrollsicherung für Kraftfahrzeuge mit einem Getriebe, umfassend eine sich am Fahrzeug abstützende Sperreinrichtung, die vom Fahrersitz aus betätigbar ist, um ein abtriebsseitiges Bauteil des Getriebes gegen eine Verdrehung zu blockieren, dadurch **gekennzeichnet**, daß die Sperreinrichtung eine steuerbare Richtungskupplung (12, 13, 14) ist, die wahlweise den Betriebszustand unwirksam, wirksam in Vorwärtsrichtung, wirksam in Rückwärtsrichtung oder wirksam in beiden Drehrichtungen einnehmen kann.

2. Wegrollsicherung nach Anspruch 1, dadurch **gekennzeichnet**, daß sich die Richtungskupplung (12, 13, 14) am Getriebegehäuse (10) abstützt und auf die Getriebeabtriebswelle (11) einwirkt.

3. Wegrollsicherung nach Anspruch 1, dadurch **gekennzeichnet**, daß sich die Richtungskupplung (12, 13, 14) am Achsgetriebegehäuse (15) abstützt und auf das Ausgleichgehäuse (16) einwirkt.

4. Wegrollsicherung nach Anspruch 2 oder 3, dadurch **gekennzeichnet**, daß die Richtungskupplung manuell steuerbar ist.

5. Wegrollsicherung nach Anspruch 2 oder 3, dadurch **gekennzeichnet**, daß die Richtungskupplung als Wegrollsperre ausgelegt ist, um ein Rollen des Fahrzeugs am Berg zu verhindern.

6. Wegrollsicherung nach Anspruch 5, dadurch **gekennzeichnet**, daß die Richtungskupplung (12, 13, 14) von einem auf die Drehrichtung des abtriebsseitigen Bauteils (11; 16) ermittelnden Sensor steuerbar ist.

7. Wegrollsicherung nach Anspruch 6, dadurch **gekennzeichnet**, daß der Sensor ein Friktionsband ist.

8. Wegrollsicherung nach Anspruch 5, dadurch **gekennzeichnet**, daß die Richtungskupplung von einem die Neigung des Fahrzeugs ermittelnden Sensor steuerbar ist.

9. Wegrollsicherung nach einem der vorhergehenden Ansprüche, dadurch **gekennzeichnet**, daß die Richtungskupplung (12, 13, 14) ein Klemmgesperre ist.
